# EUROPÄISCHE PATENTSCHRIFT

(11) **EP 4 536 513 B1**
(45) Veröffentlichungstag und Bekanntmachung des Hinweises auf die Patenterteilung: **03.06.2026**
(21) Anmeldenummer: 23733667.2
(22) Anmeldetag: 13.06.2023
(51) Int. Cl.: B60R 16/02, H02G 3/00, H02G 3/04, H02G 15/00

(54) **AUFNAHMEVORRICHTUNG FÜR LEITUNGEN EINES FAHRZEUGS**
RECEIVING DEVICE FOR CABLES OF A VEHICLE
DISPOSITIF DE RÉCEPTION POUR CABLES D'UN VÉHICULE

(30) Priorität: 13.06.2022 DE 102022114812
(43) Veröffentlichungstag der Anmeldung: 16.04.2025
(73) Patentinhaber: MAN Truck & Bus SE, 80995 München (DE)
(72) Erfinder: BULLACHER, Florian, 82166 Gräfelfing (DE); KUDELA, Grzegorz, 85570 Markt Schwaben (DE)
(86) Internationale Anmeldenummer: PCT/EP2023/065825
(87) Internationale Veröffentlichungsnummer: WO 2023/242202

(56) Entgegenhaltungen:
- DE-A1- 102013 009 713
- DE-A1- 102020 101 867
- GB-A- 2 473 343
- JP-A- 2000 108 948
- KR-B1- 100 724 754

## Beschreibung

Die vorliegende Offenbarung betrifft eine Aufnahmevorrichtung für Leitungen eines Fahrzeugs, ein Fahrzeug mit einer solchen Aufnahmevorrichtung und ein Verfahren zum Montieren einer Aufnahmevorrichtung für Leitungen an einem Fahrzeug. Die vorliegende Offenbarung betrifft insbesondere einen Kabelschacht bzw. einen Kabelkanal für Hochvoltleitungen und/oder Hydraulikleitungen in Nutzfahrzeugen, wie zum Beispiel Lastkraftwagen.

### Stand der Technik

In modernen Fahrzeugen sind aufgrund der fortschreitenden technologischen Entwicklung in zunehmenden Maße Leitungen erforderlich. Beispielsweise sind in Hybrid- und Elektrofahrzeugen Stromleitungen für die Energieversorgung von Elektromotoren sowie Steuerleitungen erforderlich, die geeignet verlegt werden müssen. Hierbei ist es wünschenswert, dass sowohl bei der Fahrzeugproduktion eine einfache Montage der Leitungen als auch eine einfache Wartung der Leitungen während der Betriebsdauer des Fahrzeugs möglich ist. Zudem sollen die Leitungen vor Umwelteinflüssen geschützt sein.

### Offenbarung der Erfindung

KR 100 724 754 B1 beschreibt eine Aufbauvorrichtung für eine Kabelrinne in einem Gebäude, umfassend seitliche Schienen, die durch Aufhängebolzen mit Seitenschienenbefestigungsplatten verbunden sind. Die Seitenschienenbefestigungsplatten sind über eine obere Schiene miteinander verbunden. Eine untere Abdeckung wird durch Ab-deckungsbefestigungsschrauben mit den seitlichen Schienen fixiert.

JP 2000 108948 A beschreibt eine Vorrichtung zum Auslegen von Verkabelungen, umfassend ein rinnenförmiges Element, das durch das Anbringen eines Kanals an ein Grundmaterial gebildet wird. Muttern sind an unteren Oberflächen hervorstehender Teile des rinnenförmigen Elements verschweißt. Eine Abdeckung, in der Aussparungen zur Aufnahme von Schraubenköpfen vorgesehen sind, wird am rinnenförmigen Element befestigt, indem Schrauben in die Muttern eingedreht werden.

GB 2 473 343 A beschreibt einen Kabelkanal, umfassend gewebte Bänder, die jeweils in vier Kanäle gefaltet sind. Die Bänder werden Ende an Ende verbunden, indem das blanke Ende eines Bandes in das blanke Ende des anderen Bandes eingeführt und zwischen einem Einsatz und einer Metallklammer zusammengeführt wird. Nieten sichern die Bänder fest aneinander und an der Montagehalterung.

DE 10 2020 101867 A1 beschreibt ein Batteriesystem, umfassend ein Batteriegehäuse, in dem eine elektrische Batterie angeordnet ist, sowie einen Leitungskanal, der einen halboffenen Aufnahmeraum zur Führung elektrischer Leitungen bereitstellt. Der Leitungskanal wird mittels Seitenflanschen, Positioniermitteln, Führungshülsen und Führungszapfen sowie Befestigungsmitteln am Batteriegehäuse fixiert.

DE 10 2013 009713 A1 beschreibt einen Kabelkanal aus expandiertem Polypropylen zur Aufnahme von elektrischen Leitungen in Hybrid- und Elektrofahrzeugen. Der Kabelkanal ist einteilig ausgebildet und ermöglicht die getrennte Führung von Hochvoltleitungen und Niedervoltleitungen durch jeweils zugeordnete Kabelführungen. Zusätzlich weist der Kabelkanal Halteelemente, Querführungen für abzweigende Leitungen sowie optionale War-tungsfenster und Aufnahmen für Beipackkomponenten auf.

Es ist eine Aufgabe der vorliegenden Offenbarung, eine Aufnahmevorrichtung für Leitungen eines Fahrzeugs, ein Fahrzeug mit einer solchen Aufnahmevorrichtung und ein Verfahren zum Montieren einer Aufnahmevorrichtung für Leitungen an einem Fahrzeug anzugeben, die eine einfache Montage bei der Fahrzeugproduktion sowie eine einfache Wartung während der Betriebsdauer des Fahrzeugs ermöglichen.

Weiter ist es eine Aufgabe der vorliegenden Offenbarung, Leitungen vor Umwelteinflüssen zu schützen, um eine Beschädigung der Leitungen zu verhindern und/oder einen sicheren Betrieb des Fahrzeugs sicherzustellen.

Diese Aufgabe wird durch den Gegenstand der unabhängigen Ansprüche gelöst. Vorteilhafte Ausgestaltungen sind in den Unteransprüchen angegeben.

Gemäß einem unabhängigen Aspekt der vorliegenden Offenbarung ist eine Aufnahmevorrichtung für Leitungen eines Fahrzeugs, insbesondere eines Nutzfahrzeugs, angegeben. Die Aufnahmevorrichtung umfasst ein erstes Deckelement eines ersten Typs bzw. einer ersten Art mit einer ersten Oberseite und einer ersten Unterseite; ein zweites Deckelement eines zweiten Typs bzw. einer zweiten Art mit einer zweiten Oberseite und einer zweiten Unterseite, wobei die erste Unterseite des ersten Deckelements und die zweite Oberseite des zweiten Deckelements einen Aufnahmeraum für die Leitungen des Fahrzeugs bereitstellen; und wenigstens ein Verbindungselement zwischen der ersten Unterseite des ersten Deckelements und der zweiten Oberseite des zweiten Deckelements.

Ein erstes Befestigungselement eines ersten Typs bzw. einer ersten Art ist durch wenigstens ein erstes Durchgangsloch im ersten Deckelement von dessen erster Oberseite in ein erstes Ende des wenigstens einen Verbindungselements einsetzbar, wobei das erste Befestigungselement eingerichtet ist, um das erste Deckelement mit dem Fahrzeug zu verbinden.

Ein zweites Befestigungselement eines zweiten Typs bzw. einer zweiten Art ist durch wenigstens ein zweites Durchgangsloch im zweiten Deckelement von dessen zweiter Unterseite in ein dem ersten Ende gegenüberliegendes zweites Ende des wenigstens einen Verbindungselements einsetzbar, um das zweite Deckelement mit dem ersten Deckelement zu verbinden

Erfindungsgemäß erfolgt eine Befestigung des oberen Deckelements und des unteren Deckelements mittels desselben Verbindungselements, wie zum Beispiel einer Langmutter. Beispielsweise kann zuerst das obere Deckelement durch Einschrauben einer Schraube in die Langmutter von oben am Fahrzeug befestigt werden, und anschließend kann das untere Deckelement am oberen Deckelement befestigt werden, indem eine weitere Schraube von unten in die Langmutter eingeschraubt wird. Die Leitungen befinden sich dabei zwischen dem oberen Deckelement und dem unteren Deckelement, so dass das obere Deckelement und das untere Deckelement einen Kabelschacht bzw. einen Kabelkanal für die Leitungen bilden.

Im Ergebnis kann der Kabelschacht bei der Fahrzeugproduktion auf eine einfache Weise zum Beispiel von oben montiert werden. Zudem kann eine einfache Wartung der Leitungen während der Betriebsdauer des Fahrzeugs ermöglicht werden, indem das untere Deckelement entfernt wird, während das obere Deckelement mit dem Fahrzeug verbunden bleibt. Des Weiteren sind die Leitungen des Fahrzeugs im erfindungsgemäßen Kabelschacht verlegt und daher insbesondere vor Umwelteinflüssen und/oder Beschädigung geschützt.

Vorzugsweise ist das erste Deckelement ein oberes Deckelement bzw. eine obere Abgrenzung des durch die Aufnahmevorrichtung gebildeten Kabelschachts, und das zweite Deckelement ist ein unteres Deckelement bzw. eine untere Abgrenzung des durch die Aufnahmevorrichtung gebildeten Kabelschachts.

Vorzugsweise ist das erste Deckelement ein Schalenelement, wie zum Beispiel eine obere Schale oder Oberschale, des durch die Aufnahmevorrichtung gebildeten Kabelschachts.

Vorzugsweise ist das erste Deckelement ein einzelnes Deckelement und/oder einstückig ausgebildet. Insbesondere kann das erste Deckelement eine einstückig ausgebildete Oberschale sein.

Alternativ kann das erste Deckelement zweiteilig oder mehrteilig ausgebildet sein.

Vorzugsweise sind die erste Oberseite und/oder die erste Unterseite des ersten Deckelements im Wesentlichen horizontal ausgerichtet, wenn das erste Deckelement am Fahrzeug oder einem Bauteil des Fahrzeugs, wie einem Fahrzeugrahmen, montiert ist.

Der Begriff "horizontal" ist im Unterschied zu "vertikal" zu verstehen. Der Begriff "horizontal" bezieht sich insbesondere auf eine horizontale Ausrichtung einer Achse oder Fläche, wobei eine Abweichung von wenigen Grad, z.B. bis zu 5° oder sogar bis zu 10°, von einer genauen horizontalen Ausrichtung noch als "im Wesentlichen horizontal" betrachtet wird. Die vertikale Richtung kann im Wesentlichen parallel zur Schwerkraft sein.

Vorzugsweise ist das zweite Deckelement länglich ausgebildet. Insbesondere kann das zweite Deckelement eine erste Erstreckung und eine zweite Erstreckung senkrecht zur ersten Erstreckung aufweisen, die kleiner als die erste Erstreckung ist. Die erste Erstreckung kann eine Längserstreckung des zweiten Deckelements sein, und die zweite Erstreckung kann eine Quererstreckung des zweiten Deckelements sein.

Vorzugsweise ist die Längserstreckung des zweiten Deckelements im Wesentlichen senkrecht zu einer Längsachse des Fahrzeugs, wenn das zweite Deckelement am wenigstens einen ersten Deckelement bzw. am Fahrzeug montiert ist.

Der Begriff "im Wesentlichen senkrecht" bezieht sich auf eine im Wesentlichen rechtwinklige Ausrichtung von Achsen und/oder Erstreckungsrichtungen, wobei eine Abweichung von wenigen Grad, z.B. bis zu 5° oder sogar bis zu 10°, von einer genauen senkrechten bzw. rechtwinkligen Ausrichtung noch als "im Wesentlichen senkrecht" betrachtet wird.

Vorzugsweise ist das zweite Deckelement eine Querstrebe und/oder ein Querprofil.

Vorzugsweise ist das zweite Deckelement eine Vielzahl von zweiten Deckelementen, wie zum Beispiel eine Vielzahl von Querstreben. Die Vielzahl von zweiten Deckelementen kann zum Beispiel zwei, drei, vier, fünf, sechs oder mehr (und/oder 10 oder weniger) zweite Deckelemente sein.

Vorzugsweise sind die zweiten Deckelemente im Wesentlichen äquidistant am ersten Deckelement bzw. am Fahrzeug montierbar oder montiert. Anders gesagt kann ein Abstand zwischen benachbarten zweiten Deckelementen z.B. entlang der Längsachse des Fahrzeugs im Wesentlichen konstant sein. Die vorliegende Offenbarung ist jedoch nicht hierauf begrenzt und der Abstand zwischen benachbarten zweiten Deckelementen kann in einigen Ausführungsformen z.B. entlang der Längsachse des Fahrzeugs variieren.

Das erste Deckelement umfasst erfindungsgemäß wenigstens eine Aufnahme, in die das wenigstens eine Verbindungselement einsetzbar ist. Erfindungsgemäß umfasst das zweite Deckelement wenigstens eine Aufnahme, in die das wenigstens eine Verbindungselement einsetzbar ist.

Das erste Deckelement umfasst wenigstens eine erste Aufnahme, und das zweite Deckelement umfasst wenigstens eine zweite Aufnahme, die der wenigstens einen ersten Aufnahme gegenüberliegt. Anders gesagt ist im montierten Zustand der Aufnahmevorrichtung jedes Verbindungselement sowohl in eine entsprechende erste Aufnahme als auch in eine entsprechende zweite Aufnahme eingesetzt bzw. erstrecktsich von der entsprechenden ersten Aufnahme in die entsprechende zweite Aufnahme.

Vorzugsweise ist das wenigstens eine erste Durchgangsloch des ersten Deckelements innerhalb der wenigstens einen ersten Aufnahme angeordnet, und das wenigstens eine zweite Durchgangsloch des zweiten Deckelements ist innerhalb der wenigstens einen zweiten Aufnahme angeordnet. Wenn ein Verbindungselement in die entsprechende erste Aufnahme und die entsprechende zweite Aufnahme eingesetzt ist, kann das erste Ende des Verbindungselements dem entsprechenden ersten Durchgangsloch gegenüberliegen, und das zweite Ende des Verbindungselements kann dem entsprechenden zweiten Durchgangsloch gegenüberliegen. Somit kann das wenigstens eine erste Befestigungselement durch das wenigstens eine erste Durchgangsloch des ersten Deckelements in das erste Ende des wenigstens einen Verbindungselements eingesetzt, insbesondere eingeschraubt, werden. Ähnlich kann das wenigstens eine zweite Befestigungselement durch das wenigstens eine zweite Durchgangsloch des zweiten Deckelements in das zweite Ende des wenigstens einen Verbindungselements eingesetzt, insbesondere eingeschraubt, werden.

Erfindungsgemäß weist die wenigstens eine erste Aufnahme des ersten Deckelements und/oder die wenigstens eine zweite Aufnahme des zweiten Deckelements, einen kantigen Querschnitt auf. Der Querschnitt kann dabei im Wesentlichen parallel zu einer Öffnungsebene des wenigstens einen ersten Durchgangslochs und/oder des wenigstens einen zweiten Durchgangslochs definiert sein. Durch den kantigen Querschnitt wird eine Drehung des wenigstens einen Verbindungselements in der wenigstens einen Aufnahme verhindert.

Vorzugsweise sind die wenigstens eine erste Aufnahme und/oder die wenigstens eine zweite Aufnahme als Vierkant bzw. vierkantig ausgebildet.

Vorzugsweise sind die Aufnahmen, wie zum Beispiel die wenigstens eine erste Aufnahme und die wenigstens eine zweite Aufnahme, und dass wenigstens eine Verbindungselement formgleich und/oder mit gleichem Querschnitt ausgebildet. Beispielsweise können die Aufnahmen und die Verbindungselemente vierkantig ausgebildet sein, so dass eine Drehung der Verbindungselemente in den Aufnahmen verhindert werden kann.

In einigen Ausführungsformen kann das erste Deckelement eine Vielzahl von (ersten) Aufnahmen für eine entsprechende Vielzahl von Verbindungselementen umfassen. Ähnlich kann das zweite Deckelement eine Vielzahl von (zweiten) Aufnahmen für die Vielzahl von Verbindungselementen umfassen. Insbesondere kann für jedes Verbindungselement eine entsprechende erste Aufnahme (und ein entsprechendes erstes Durchgangsloch) sowie eine entsprechende zweite Aufnahme (und ein entsprechendes zweites Durchgangsloch) vorgesehen sein.

Vorzugsweise sind das erste Deckelement und die wenigstens eine erste Aufnahme einstückig ausgebildet. Beispielsweise kann das erste Deckelement mittels Spritzguss und/oder aus Kunststoff ausgebildet werden.

Vorzugsweise ist die wenigstens eine erste Aufnahme als Vertiefung im ersten Deckelement ausgebildet. Alternativ kann die wenigstens eine erste Aufnahme als Vorsprung auf dem ersten Deckelement ausgebildet sein. In einer weiteren Ausführungsform kann die wenigstens eine erste Aufnahme teilweise als Vertiefung und teilweise als Vorsprung im/am ersten Deckelement ausgebildet sein.

Ergänzend oder alternativ sind das zweite Deckelement und die zweite Aufnahme einstückig ausgebildet. Beispielsweise kann das zweite Deckelement mittels Spritzguss und/oder aus Kunststoff ausgebildet werden.

Vorzugsweise ist die wenigstens eine zweite Aufnahme als Vertiefung im zweiten Deckelement ausgebildet. Alternativ kann die wenigstens eine zweite Aufnahme als Vorsprung auf dem zweiten Deckelement ausgebildet sein. In einer weiteren Ausführungsform kann die wenigstens eine zweite Aufnahme teilweise als Vertiefung und teilweise als Vorsprung im/am zweiten Deckelement ausgebildet sein.

Vorzugsweise ist das erste Befestigungselement eine Schraube. Ergänzend oder alternativ kann das zweite Befestigungselement eine Schraube sein.

Vorzugsweise weist das wenigstens eine Verbindungselement ein Innengewinde auf, in das das erste Befestigungselement und das zweite Befestigungselement von gegenüberliegenden Enden des Verbindungselements einschraubbar sind. Insbesondere weist das wenigstens eine Verbindungselement das erste Ende und das dem ersten Ende gegenüberliegende zweite Ende auf, wobei sich das Innengewinde zumindest teilweise, vorzugsweise vollständig, zwischen dem ersten Ende und dem zweiten Ende erstreckt.

Vorzugsweise ist das wenigstens eine Verbindungselement eine Langmutter. Die Langmutter kann das Innengewinde und optional das nicht-kreisförmige Äußere aufweisen, so dass das erste Befestigungselement von oben und das zweite Befestigungselement von unten in das Verbindungselement eingeschraubt werden können, ohne dass sich das Verbindungselement in den entsprechenden Aufnahmen des oberen Deckelements und des unteren Deckelements dreht.

Vorzugsweise umfasst die Aufnahmevorrichtung wenigstens eine Öffnung, die den Aufnahmeraum mit einer Umgebung verbindet. Die wenigstens eine Öffnung kann zum Beispiel für eine Lüftung und/oder Kühlung der Leitungen vorgesehen sein.

Vorzugsweise ist die zweite Unterseite des zweiten Deckelements in einem montierten Zustand derart im Fahrzeug angeordnet, dass sie einem Energiespeicher des Fahrzeugs gegenüberliegt. Damit kann eine Unterseite des Kabelschachts nach einem Entfernen des Energiespeichers zum Beispiel für eine Wartung der Leitungen zugänglich sein.

Gemäß einem weiteren unabhängigen Aspekt der vorliegenden Offenbarung ist ein Fahrzeug, insbesondere ein Nutzfahrzeug und/oder Lastkraftwagen angegeben. Das Fahrzeug umfasst die Aufnahmevorrichtung für Leitungen gemäß den Ausführungsformen der vorliegenden Offenbarung.

Der Begriff Fahrzeug umfasst PKW, LKW, Busse, Wohnmobile, Krafträder, etc., die der Beförderung von Personen, Gütern, etc. dienen. Insbesondere umfasst der Begriff Nutzfahrzeuge zur Güter- und/oder Personenbeförderung.

Vorzugsweise umfasst das Fahrzeug eine Vielzahl von Leitungen, die in der Aufnahmevorrichtung angeordnet sind.

Vorzugsweise umfassen, oder sind, die Vielzahl von Leitungen elektrische Leitungen und/oder Hydraulikleitungen.

In einigen Ausführungsformen, die mit anderen hier beschriebenen Ausführungsformen kombiniert werden können, ist das Fahrzeug ein Hybrid- oder Elektrofahrzeug. Das Hybrid- oder Elektrofahrzeug kann gemäß Ausführungsformen ein reines Elektrofahrzeug (BEV) oder ein Plugin-Hybridfahrzeug (PHEV) sein. Fahrzeuge mit Elektroantrieb (insbesondere Hybrid- oder Elektrofahrzeuge) umfassen elektrische Energiespeicher (z.B. Batterien), die über eine Ladevorrichtung des Fahrzeugs an eine Ladestation angeschlossen und aufgeladen werden können.

Die Leitungen, die in der erfindungsgemäßen Aufnahmevorrichtung verlegt sind bzw. verlegt werden, können Hochvoltleitungen sein, die den Energiespeicher mit dem Elektromotor verbinden. Die vorliegende Offenbarung ist jedoch nicht hierauf beschränkt und es können andere Leitungen in der erfindungsgemäßen Aufnahmevorrichtung verlegt werden, die für den Betrieb des Fahrzeugs verwendet werden, wie zum Beispiel Steuerleitungen und/oder Hydraulikleitungen.

Gemäß einem weiteren unabhängigen Aspekt der vorliegenden Offenbarung ist ein Verfahren zum Montieren einer Aufnahmevorrichtung für Leitungen an einem Fahrzeug angegeben. Das Verfahren umfasst ein Einsetzen eines ersten Befestigungselements eines ersten Typs bzw. einer ersten Art durch wenigstens ein erstes Durchgangsloch in einem ersten Deckelement eines ersten Typs bzw. einer ersten Art von dessen (erster) Oberseite in ein erstes Ende wenigstens eines Verbindungselements, das an einer (ersten) Unterseite des ersten Deckelements angeordnet ist, um das erste Deckelement mit dem Fahrzeug oder einem Bauteil des Fahrzeugs zu verbinden; und ein Einsetzen eines zweiten Befestigungselements eines zweiten Typs bzw. einer zweiten Art durch wenigstens ein zweites Durchgangsloch in einem zweiten Deckelement eines zweiten Typs bzw. einer zweiten Art von dessen (zweiter) Unterseite in ein dem ersten Ende gegenüberliegendes zweites Ende des wenigstens einen Verbindungselements, das an einer (zweiten) Oberseite des zweiten Deckelements angeordnet ist, um das zweite Deckelement mit dem ersten Deckelement zu verbinden.

Vorzugsweise umfasst das Verfahren weiter ein Anordnen von Leitungen an der (ersten) Unterseite des ersten Deckelements. Das Anordnen der Leitungen an der (ersten) Unterseite des ersten Deckelements kann vor oder nach dem Verbinden des ersten Deckelements mit dem Fahrzeug erfolgen. Ergänzend oder alternativ kann das Anordnen der Leitungen an der (ersten) Unterseite des ersten Deckelements vor dem Verbinden des zweiten Deckelements mit dem ersten Deckelement erfolgen.

Beispielsweise kann zuerst das erste Deckelement am Fahrzeug befestigt werden, dann können die Leitungen an der Unterseite des ersten Deckelements angeordnet werden, und schließlich kann das zweite Deckelement am ersten Deckelement und damit am Fahrzeug befestigt werden. Im Ergebnis kann ein doppelt verschraubter Kabelkanal bzw. Kabelschacht gebildet werden.

In einem weiteren Beispiel können zuerst die Leitungen an der Unterseite des ersten Deckelements angeordnet werden, und dann kann das zweite Deckelement am ersten Deckelement befestigt werden. Der so gebildete Kabelkanal kann dann anschließend mit dem Fahrzeug verbunden werden.

In einigen Ausführungsformen kann das Verfahren weiter ein Demontieren des Kabelkanals umfassen, beispielsweise für eine Wartung des Fahrzeugs und/oder der Leitungen. Das Demontieren kann ein Lösen des zweiten Deckelements vom ersten Deckelement umfassen, während das erste Deckelement am Fahrzeug befestigt ist bzw. bleibt, um das zweite Deckelement zu entfernen. Insbesondere können die zweiten Befestigungselemente aus den entsprechenden Verbindungselementen entfernt, insbesondere ausgeschraubt, werden, um das zweite Deckelement zu entfernen und einen Zugang zu den Leitungen von unten zu ermöglichen.

### Kurze Beschreibung der Zeichnungen

Ausführungsbeispiele der Offenbarung sind in den Figuren dargestellt und werden im Folgenden näher beschrieben. Es zeigen:
Figur 1A eine Explosionsansicht einer Aufnahmevorrichtung für Leitungen an einem Fahrzeug gemäß Ausführungsformen der vorliegenden Offenbarung;
Figur 1B eine montierte Aufnahmevorrichtung für Leitungen an einem Fahrzeug gemäß Ausführungsformen der vorliegenden Offenbarung;
Figur 2 eine teilweise demontierte Aufnahmevorrichtung für Leitungen an einem Fahrzeug gemäß Ausführungsformen der vorliegenden Offenbarung;
Figur 3 eine perspektivische Ansicht einer Aufnahmevorrichtung für Leitungen an einem Fahrzeug gemäß Ausführungsformen der vorliegenden Offenbarung;
Figur 4 eine Draufsicht einer Aufnahmevorrichtung für Leitungen an einem Fahrzeug gemäß Ausführungsformen der vorliegenden Offenbarung;
Figur 5 eine Schnittansicht einer Aufnahmevorrichtung für Leitungen an einem Fahrzeug gemäß Ausführungsformen der vorliegenden Offenbarung;
Figur 6 eine perspektivische Ansicht einer Aufnahmevorrichtung für Leitungen an einem Fahrzeug gemäß weiteren Ausführungsformen der vorliegenden Offenbarung; und
Figur 7 ein Flussdiagramm eines Verfahrens zum Montieren einer Aufnahmevorrichtung für Leitungen an einem Fahrzeug gemäß Ausführungsformen der vorliegenden Offenbarung. Ausführungsformen der Offenbarung

Im Folgenden werden, sofern nicht anders vermerkt, für gleiche und gleichwirkende Elemente gleiche Bezugszeichen verwendet.

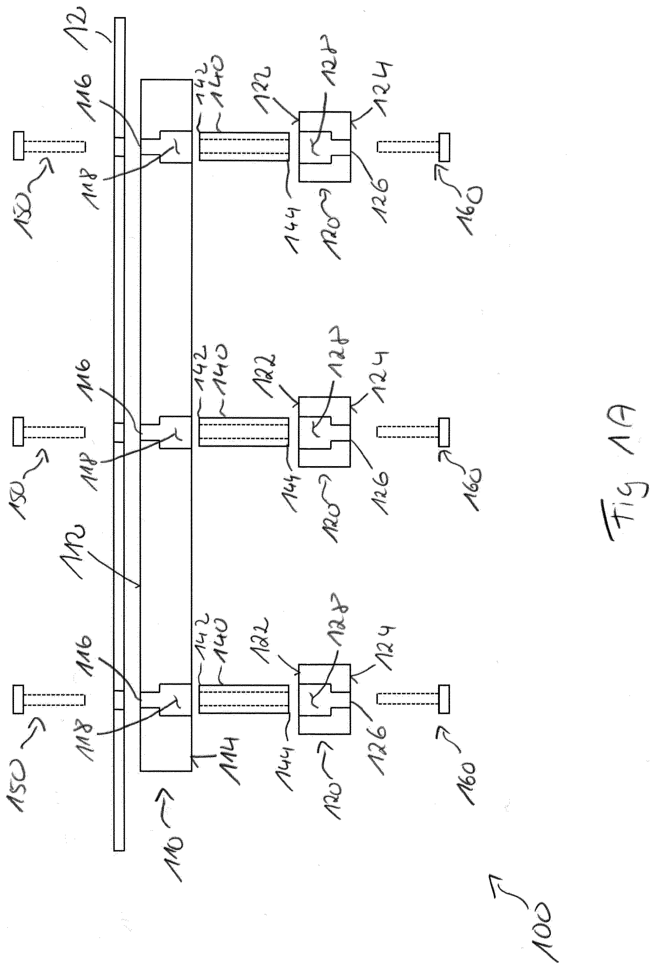

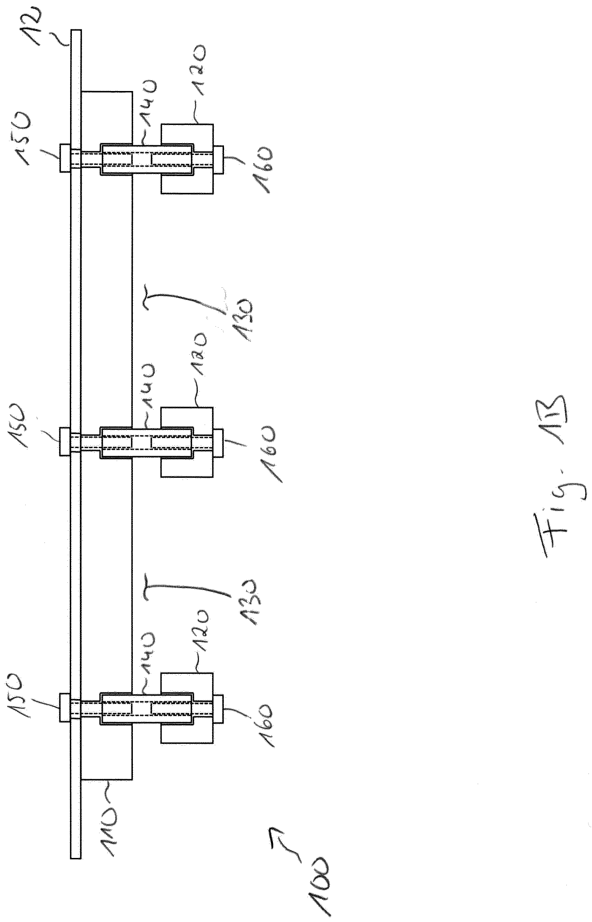

Figur 1A zeigt eine Explosionsansicht einer Aufnahmevorrichtung 100 für Leitungen an einem Fahrzeug gemäß Ausführungsformen der vorliegenden Offenbarung. Figur 1B zeigt die montierte Aufnahmevorrichtung 100 gemäß Ausführungsformen der vorliegenden Offenbarung.

Im Beispiel der Figuren 1A und 1B wird bzw. ist die Aufnahmevorrichtung 100 an einem Bauteil 12 des Fahrzeugs, wie zum Beispiel einem Fahrzeugrahmen, montiert.

Die Aufnahmevorrichtung 100 umfasst ein erstes Deckelement 110 eines ersten Typs bzw. einer ersten Art mit einer ersten Oberseite 112 und einer ersten Unterseite 114 sowie ein zweites Deckelement 120 eines zweiten Typs bzw. einer zweiten Art mit einer zweiten Oberseite 122 und einer zweiten Unterseite 124. Die erste Unterseite 114 des ersten Deckelements 110 und die zweite Oberseite 122 des zweiten Deckelements 120 liegen sich gegenüber und bilden im montierten Zustand einen Aufnahmeraum 130 für Leitungen des Fahrzeugs. Insbesondere bildet das erste Deckelement 110 eine obere Abgrenzung des Aufnahmeraums 130, und das zweite Deckelement 120 bildet eine untere Abgrenzung des Aufnahmeraums 130.

Das erste Deckelement 110 kann ein Deckel oder eine Oberschale der Aufnahmevorrichtung 100 sein. In einigen Ausführungsformen kann das erste Deckelement 110 ein einzelnes Deckelement und/oder einstückig ausgebildet sein, beispielsweise durch Spritzguss und/oder aus Kunststoff.

Ergänzend oder alternativ kann das zweite Deckelement 120 länglich ausgebildet sein. Insbesondere kann das zweite Deckelement 120 eine Querstrebe und/oder ein Querprofil sein. Die Längserstreckung des zweiten Deckelements 120 kann im Wesentlichen senkrecht zu einer Längsachse des Fahrzeugs sein, wenn das zweite Deckelement 120 am ersten Deckelement 110 bzw. am Fahrzeug montiert ist.

In einigen Ausführungsformen kann das zweite Deckelement 120 eine Vielzahl von zweiten Deckelementen, wie zum Beispiel eine Vielzahl von Querstreben, sein. Die zweiten Deckelemente 120 können dabei im Wesentlichen äquidistant am wenigstens einen ersten Deckelement 110 bzw. am Fahrzeug montierbar oder montiert sein. Anders gesagt kann ein Abstand zwischen benachbarten zweiten Deckelementen 120 z.B. entlang der Längsachse des Fahrzeugs im Wesentlichen konstant sein. Die vorliegende Offenbarung ist jedoch nicht hierauf begrenzt und der Abstand zwischen benachbarten zweiten Deckelementen 120 kann in einigen Ausführungsformen z.B. entlang der Längsachse des Fahrzeugs variieren (nicht gezeigt).

Die Aufnahmevorrichtung 100 umfasst weiter wenigstens ein Verbindungselement 140 zwischen der ersten Unterseite 114 des ersten Deckelements 110 und der zweite Oberseiten 122 des zweiten Deckelements 120. Anders gesagt ist das wenigstens eine Verbindungselement 140 zwischen dem ersten Deckelement 110 und dem zweiten Deckelement 120 angeordnet.

Ein erstes Befestigungselement 150 eines ersten Typs bzw. einer ersten Art ist durch wenigstens ein erstes Durchgangsloch 116 im ersten Deckelement 110 von dessen erster Oberseite 112 in ein erstes Ende 142 des wenigstens einen Verbindungselements 140 einsetzbar, um das erste Deckelement 120 mit dem Fahrzeug zu verbinden.

Zudem ist ein zweites Befestigungselement 160 eines zweiten Typs bzw. einer zweiten Art durch wenigstens ein zweites Durchgangsloch 126 im zweiten Deckelement 120 von dessen zweiter Unterseite 124 in ein zweites Ende 144 des wenigstens einen Verbindungselements 140 einsetzbar, um das zweite Deckelement 120 mit dem ersten Deckelement 110 zu verbinden.

In einigen Ausführungsformen kann das wenigstens eine Verbindungselement 140 eine Langmutter mit einem Innengewinde sein. Das erste Befestigungselement 150 und das zweite Befestigungselement 160 können Schrauben sein, die in gegenüberliegende Enden bzw. Seiten der Langmutter einschraubbar (Figur 1A) bzw. eingeschraubt (Figur 1B) sind.

Hierdurch können zum Beispiel eine Oberschale und Querstreben unter Verwendung von Langmuttern sowohl miteinander als auch mit dem Fahrzeug verschraubt werden, um einen Kabelschacht zu bilden. Für eine der Montage der Oberschale bzw. des Kabelschachts am Fahrzeug können Schrauben von oben in die Langmuttern eingeschraubt werden, und für eine Montage der Querstreben an der Oberschale können Schrauben von unten in die Langmuttern eingeschraubt werden. Hierdurch ist ebenso eine Wartung der Leitungen durch Lösen der von unten eingeschraubten Schrauben und Entfernen der Querstreben möglich, wobei die Oberschale mit dem Fahrzeug verschraubt bleibt. Im Ergebnis können gleichzeitig eine einfache Montage des Kabelschachts von oben und eine einfache Wartung der Kabel von unten ermöglicht werden.

Erfindungsgemäß umfasst das erste Deckelement 110 wenigstens eine erste Aufnahme 118, in die das wenigstens eine Verbindungselement 140 einsetzbar ist. Erfindungsgemäß umfasst das zweite Deckelement 120 wenigstens eine zweite Aufnahme 128, in die ebenfalls das wenigstens eine Verbindungselement 140 einsetzbar ist. Insbesondere kann jedes Verbindungselement sowohl in eine entsprechende erste Aufnahme 118 als auch in eine entsprechende zweite Aufnahme 128 eingesetzt werden.

Das wenigstens eine erste Durchgangsloch 116 des ersten Deckelements 110 kann innerhalb der wenigstens einen ersten Aufnahme 118 angeordnet sein, und das wenigstens eine zweite Durchgangsloch 126 des zweiten Deckelements 120 kann innerhalb der wenigstens einen zweiten Aufnahme 128 angeordnet sein. Somit kann das erste Befestigungselement 150 durch das wenigstens eine erste Durchgangsloch 116 des ersten Deckelements 120 in das erste Ende 142 des wenigstens einen Verbindungselements 140 eingesetzt, insbesondere eingeschraubt, werden. Ähnlich kann das zweite Befestigungselement 160 durch das wenigstens eine zweite Durchgangsloch 126 des zweiten Deckelements 120 in das zweite Ende 144 des wenigstens einen Verbindungselements 140 eingesetzt, insbesondere eingeschraubt, werden.

Erfindungsgemäß weisen die wenigstens eine erste Aufnahme 118 des ersten Deckelements 110 und/oder die wenigstens eine zweite Aufnahme 128 des zweiten Deckelements 120 einen kantigen Querschnitt auf. Durch den kantigen Querschnitt wird eine Drehung des wenigstens einen Verbindungselements 140 in den Aufnahmen verhindert. Die kantige Form kann zum Beispiel vierkantig sein.

Die wenigstens eine erste Aufnahme 118 des ersten Deckelements 110 und/oder die wenigstens eine zweite Aufnahme 128 des zweiten Deckelements 120 können als Vertiefung (Figur 1A) oder als Vorsprung (nicht gezeigt) ausgebildet sein. In weiteren Ausführungsformen können die wenigstens eine erste Aufnahme 118 des ersten Deckelements 110 und/oder die wenigstens eine zweite Aufnahme 128 des zweiten Deckelements 120 teilweise vertieft sein und teilweise vom jeweiligen Deckelement vorspringen.

In einigen Ausführungsformen kann die Aufnahmevorrichtung 100 wenigstens eine Öffnung aufweisen, die den Aufnahmeraum 130 mit einer Umgebung verbindet. Die wenigstens eine Öffnung kann zum Beispiel für eine Lüftung und/oder Kühlung der Leitungen vorgesehen sein.

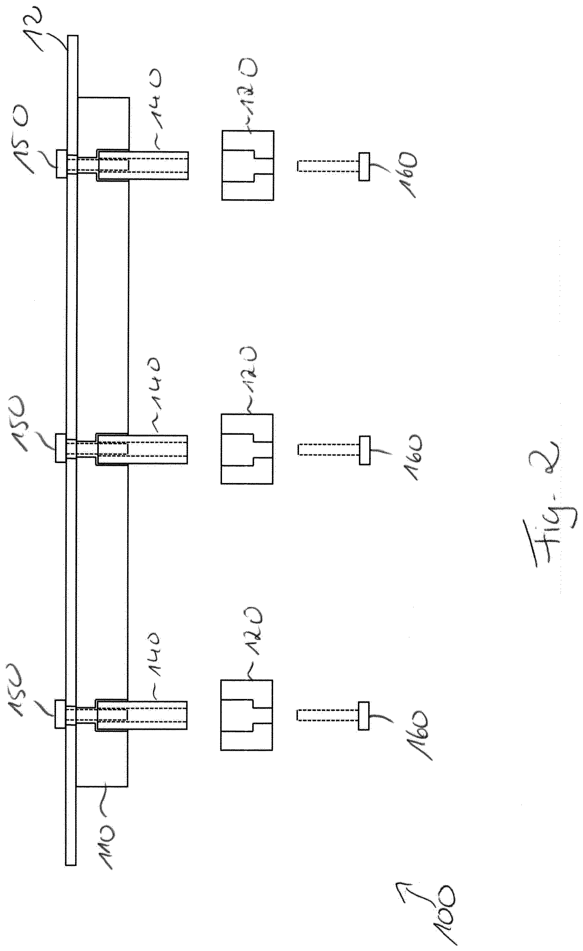

Figur 2 zeigt eine teilweise demontierte Aufnahmevorrichtung 100 für Leitungen an einem Fahrzeug gemäß Ausführungsformen der vorliegenden Offenbarung.

Für eine Wartung des Fahrzeugs und/oder der Leitungen kann die Aufnahmevorrichtung 100 teilweise demontiert werden, indem das zweite Deckelement 120 vom ersten Deckelement 110 gelöst wird, während das erste Deckelement 110 am Fahrzeug befestigt bleibt. Insbesondere können die zweiten Befestigungselemente 160 aus den entsprechenden Verbindungselementen 140 entfernt, insbesondere ausgeschraubt, werden, um das zweite Deckelement 120 zu entfernen und einen Zugang zu den Leitungen von unten zu ermöglichen.

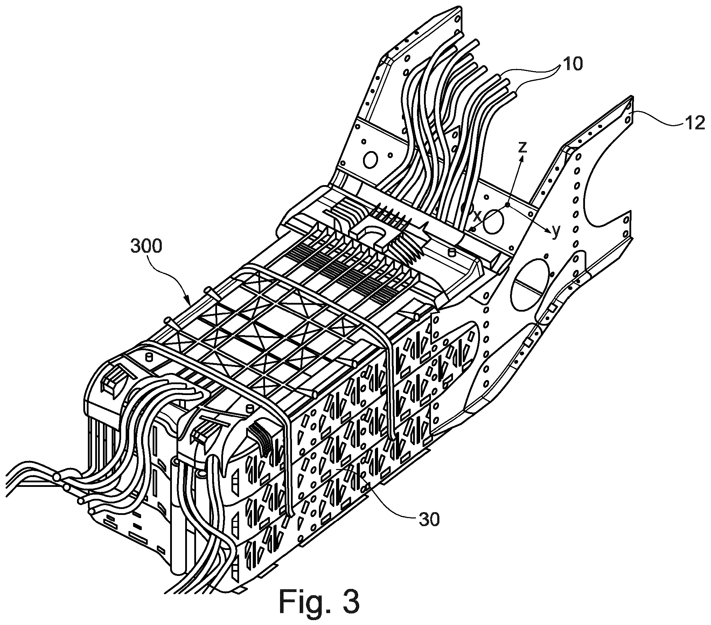

Figur 3 zeigt eine perspektivische Ansicht einer Aufnahmevorrichtung 300 für Leitungen 20 an einem Fahrzeug gemäß Ausführungsformen der vorliegenden Offenbarung.

Im Beispiel der Figur 3 ist die Unterseite der Aufnahmevorrichtung 300 in einem montierten Zustand derart im Fahrzeug angeordnet, dass sie einem Energiespeicher 30 des Fahrzeugs gegenüberliegt. Damit kann eine Unterseite des Kabelschachts nach einem Entfernen des Energiespeichers zum Beispiel für eine Wartung der Leitungen zugänglich sein.

Optional kann die Aufnahmevorrichtung 300 eine weitere Funktionsintegration ermöglichen, wie zum Beispiel eine Aufnahme für einen Druckluftbehälter, Befestigungsmöglichkeiten für PA-Leitungen, integrierte Referenzpunkte für eine Montagelehre, etc.

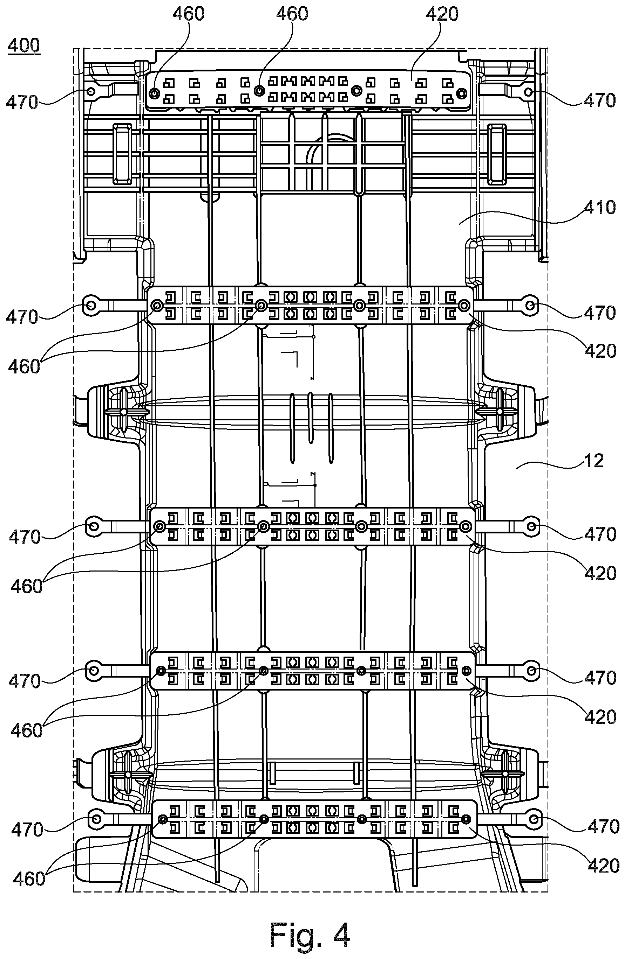

Figur 4 zeigt eine Draufsicht einer Aufnahmevorrichtung 400 für Leitungen an einem Fahrzeug gemäß Ausführungsformen der vorliegenden Offenbarung.

Die Aufnahmevorrichtung 400 umfasst das erste Deckelement, das als Oberschale 410 ausgebildet ist, und umfasst weiter mehrere zweite Deckelemente, die als Querstreben 420 ausgebildet sein. Die Querstreben 420 sind durch Schrauben 460 an der Oberschale 410 befestigt. Insbesondere sind die Schrauben 460 in Langmuttern eingeschraubt, die auch zur Befestigung der Oberschale 410 am Fahrzeugrahmen 12 dienen.

In einigen Ausführungsformen kann wenigstens ein weiteres Befestigungsmittel 470, wie wenigstens eine Schraube, verwendet werden, um die Querstreben 420 zusätzlich zum Beispiel mit dem Fahrzeugrahmen 12 zu verschrauben.

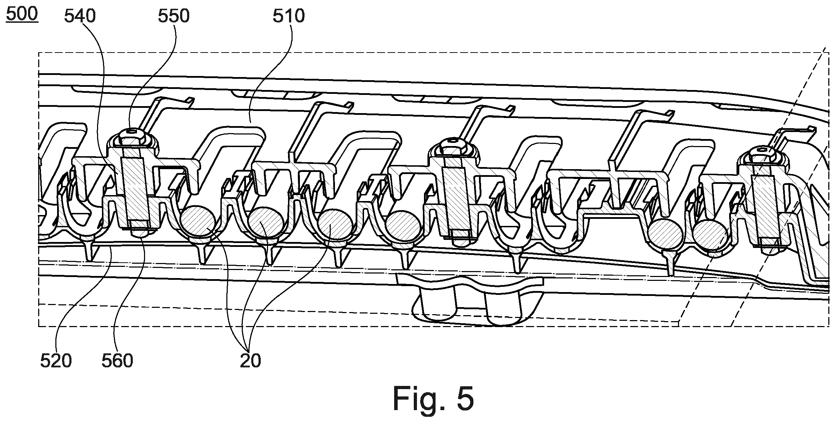

Figur 5 zeigt eine Schnittansicht einer Aufnahmevorrichtung 500 für Leitungen an einem Fahrzeug gemäß Ausführungsformen der vorliegenden Offenbarung.

Die Aufnahmevorrichtung 500 umfasst das erste Deckelement 510 und das zweite Deckelement 520, die den Aufnahmebereich für die Leitungen 20 definieren. Langmuttern 540 werden verwendet, um das erste Deckelement 510 unter Verwendung von Schrauben 550 mit dem Fahrzeug zu verbinden und das zweite Deckelement 520 unter Verwendung von weiteren Schrauben 560 mit dem ersten Deckelement 510 zu verbinden.

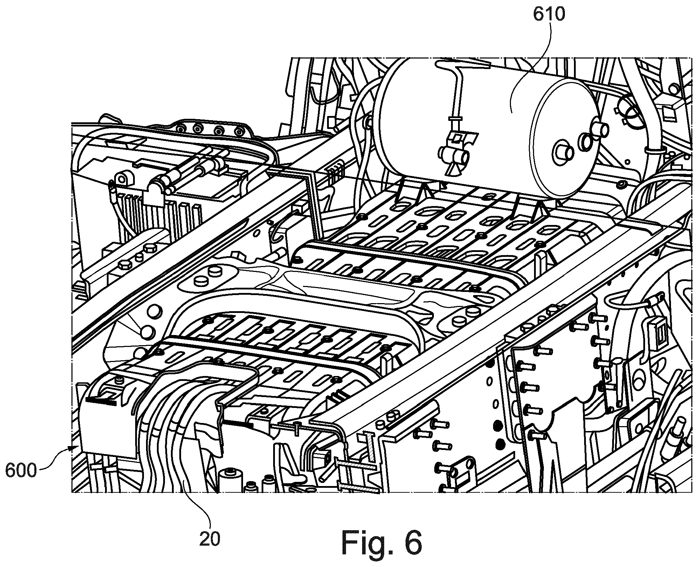

Figur 6 zeigt eine perspektivische Ansicht einer Aufnahmevorrichtung 600 für Leitungen 20 an einem Fahrzeug gemäß weiteren Ausführungsformen der vorliegenden Offenbarung.

In einigen Ausführungsformen können auf der Aufnahmevorrichtung 600, insbesondere auf dem ersten Deckelement wie der Oberschale, eine oder mehrere Fahrzeugkomponenten 610 montiert sein. Beispielhafte Fahrzeugkomponenten 610 umfassen Druckluftbehälter, sind jedoch nicht hierauf begrenzt.

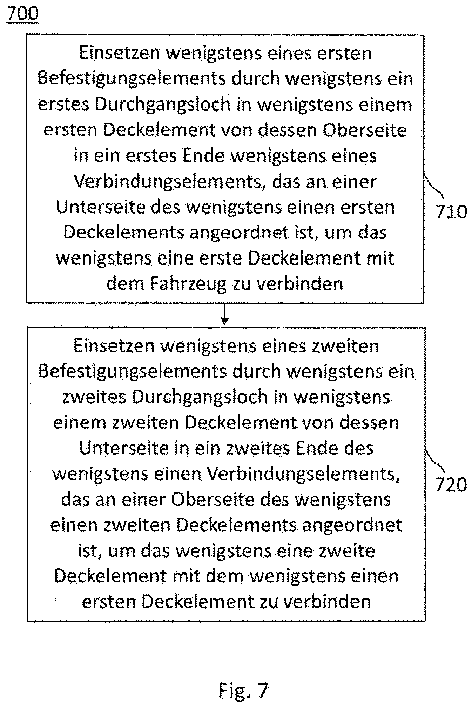

Figur 7 zeigt ein Flussdiagramm eines Verfahrens 600 zum Montieren einer Aufnahmevorrichtung für Leitungen an einem Fahrzeug gemäß Ausführungsformen der vorliegenden Offenbarung.

Das Verfahren 600 umfasst im Block 610 ein Einsetzen eines ersten Befestigungselements durch ein erstes Durchgangsloch in einem ersten Deckelement eines ersten Typs bzw. einer ersten Art von dessen Oberseite in ein erstes Ende wenigstens eines Verbindungselements, das an einer Unterseite des ersten Deckelements angeordnet ist, um das erste Deckelement mit dem Fahrzeug zu verbinden; und im Block 620 ein Einsetzen eines zweiten Befestigungselements durch ein zweites Durchgangsloch in einem zweiten Deckelement eines zweiten Typs bzw. einer zweiten Art von dessen Unterseite in ein zweites Ende des wenigstens einen Verbindungselements, das an einer Oberseite des zweiten Deckelements angeordnet ist, um das zweite Deckelement mit dem ersten Deckelement zu verbinden.

In einem ersten Beispiel des erfindungsgemäßen Verfahrens 700 kann zuerst das erste Deckelement am Fahrzeug befestigt werden, dann können die Leitungen an der Unterseite des ersten Deckelements angeordnet werden, und schließlich kann das zweite Deckelement am ersten Deckelement und damit am Fahrzeug befestigt werden.

In einem zweiten Beispiel des erfindungsgemäßen Verfahrens 700 können zuerst die Leitungen an der Unterseite des ersten Deckelements angeordnet werden, und dann kann das zweite Deckelement am ersten Deckelement befestigt werden. Der so gebildete Kabelkanal kann dann anschließend mit dem Fahrzeug verbunden werden.

In einigen Ausführungsformen kann das Verfahren 700 weiter ein Demontieren des Kabelkanals umfassen, beispielsweise für eine Wartung des Fahrzeugs und/oder der Leitungen. Das Demontieren kann ein Lösen des zweiten Deckelements vom ersten Deckelement umfassen, während das erste Deckelement am Fahrzeug befestigt ist bzw. bleibt, um das zweite Deckelement zu entfernen. Insbesondere können die zweiten Befestigungselemente aus den entsprechenden Verbindungselementen entfernt, insbesondere ausgeschraubt, werden, um das zweite Deckelement zu entfernen und einen Zugang zu den Leitungen von unten zu ermöglichen.

Erfindungsgemäß erfolgt eine Befestigung des oberen Deckelements und des unteren Deckelements mittels desselben Verbindungselements, wie zum Beispiel einer Langmutter. Beispielsweise kann zuerst das obere Deckelement durch Einschrauben einer Schraube in die Langmutter von oben am Fahrzeug befestigt werden, und anschließend kann das untere Deckelement am oberen Deckelement befestigt werden, indem eine weitere Schraube von unten in die Langmutter eingeschraubt wird. Die Leitungen befinden sich dabei zwischen dem oberen Deckelement und dem unteren Deckelement, so dass das obere Deckelement und das untere Deckelement einen Kabelschacht für die Leitungen bilden.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche definiert wird.

## Patentansprüche

1. Aufnahmevorrichtung (100) für Leitungen (20) eines Fahrzeugs, umfassend:
ein erstes Deckelement (110) eines ersten Typs mit einer ersten Oberseite (112) und einer ersten Unterseite (114);
ein zweites Deckelement (120) eines zweiten Typs mit einer zweiten Oberseite (122) und einer zweiten Unterseite (124), wobei die erste Unterseite (114) des ersten Deckelements (110) und die zweite Oberseite (122) des zweiten Deckelements (120) einen Aufnahmeraum (130) für die Leitungen (20) des Fahrzeugs bereitstellen; und
wenigstens ein Verbindungselement (140) zwischen der ersten Unterseite (114) des wenigstens einen ersten Deckelements (110) und der zweiten Oberseite (122) des zweiten Deckelements (120),
wobei ein erstes Befestigungselement (150) eines ersten Typs durch wenigstens ein erstes Durchgangsloch (116) im ersten Deckelement (110) von dessen erster Oberseite (112) in ein erstes Ende (142) des wenigstens einen Verbindungselements (140) einsetzbar ist, wobei das erste Befestigungselement (150) eingerichtet ist, um das erste Deckelement (110) mit dem Fahrzeug zu verbinden, wobei ein zweites Befestigungselement (160) eines zweiten Typs durch wenigstens ein zweites Durchgangsloch (126) im zweiten Deckelement (120) von dessen zweiter Unterseite (124) in ein dem ersten Ende gegenüberliegendes zweites Ende (144) des wenigstens einen Verbindungselements (140) einsetzbar ist, um das zweite Deckelement (120) mit dem ersten Deckelement (110) zu verbinden,
wobei das erste Deckelement (110) wenigstens eine erste Aufnahme (118) umfasst, in die das wenigstens eine Verbindungselement (140) einsetzbar ist,
wobei das zweite Deckelement (120) wenigstens eine zweite Aufnahme (118) umfasst, die der wenigstens einen ersten Aufnahme (118) gegenüberliegt und in die das wenigstens eine Verbindungselement (140) einsetzbar ist, und
wobei wenigstens eine der ersten oder zweiten Aufnahme (118, 128) einen kantigen Querschnitt aufweist, um eine Drehung des wenigstens einen Verbindungselements (140) in der wenigstens einen Aufnahme (118, 128) zu verhindern.

2. Die Aufnahmevorrichtung (100) nach Anspruch 1, wobei das erste Deckelement (110) ein oberes Deckelement und/oder eine Oberschale ist, insbesondere eine einstückig ausgebildete Oberschale.

3. Die Aufnahmevorrichtung (100) nach Anspruch 1 oder 2, wobei das zweite Deckelement (120) ein unteres Deckelement und/oder eine Querstrebe ist, insbesondere wobei das zweite Deckelement (120) eine Vielzahl von Querstreben ist.

4. Die Aufnahmevorrichtung (100) nach einem der Ansprüche 1 bis 3, wobei das wenigstens eine Verbindungselement (140) ein Innengewinde aufweist, in das das erste Befestigungselement (150) und das zweite Befestigungselement (160) einschraubbar sind.

5. Die Aufnahmevorrichtung (100) nach einem der Ansprüche 1 bis 4, wobei das wenigstens eine Verbindungselement (140) eine Langmutter ist.

6. Die Aufnahmevorrichtung (100) nach einem der Ansprüche 1 bis 5, wobei die zweite Unterseite (124) des zweiten Deckelements (120) eingerichtet ist, in einem montierten Zustand derart im Fahrzeug angeordnet zu sein, dass sie einem Energiespeicher des Fahrzeugs gegenüberliegt.

7. Fahrzeug, insbesondere Lastkraftwagen, umfassend die Aufnahmevorrichtung (100) nach einem der Ansprüche 1 bis 6.

8. Fahrzeug nach Anspruch 7, weiter umfassend eine Vielzahl von Leitungen (20), die in der Aufnahmevorrichtung (100) angeordnet sind, insbesondere wobei die Vielzahl von Leitungen (20) elektrische Leitungen und/oder Hydraulikleitungen umfassen.

9. Verfahren (700) zum Montieren einer Aufnahmevorrichtung für Leitungen an einem Fahrzeug, umfassend:
Einsetzen (710) eines ersten Befestigungselements eines ersten Typs durch wenigstens ein erstes Durchgangsloch in einem ersten Deckelement eines ersten Typs von dessen Oberseite in ein erstes Ende wenigstens eines Verbindungselements, das an einer Unterseite des ersten Deckelements angeordnet ist, um das erste Deckelement mit dem Fahrzeug zu verbinden; und
Einsetzen (720) eines zweiten Befestigungselements eines zweiten Typs durch wenigstens ein zweites Durchgangsloch in einem zweiten Deckelement eines zweiten Typs von dessen Unterseite in ein zweites Ende des wenigstens einen Verbindungselements, das an einer Oberseite des zweiten Deckelements angeordnet ist, um das zweite Deckelement mit dem ersten Deckelement zu verbinden.

## Claims

1. A holding device (100) for lines (20) of a vehicle, comprising:
a first cover element (110) of a first type having a first upper side (112) and a first lower side (114);
a second cover element (120) of a second type having a second upper side (122) and a second lower side (124), wherein the first lower side (114) of the first cover element (110) and the second upper side (122) of the second cover element (120) provide a receiving space (130) for the lines (20) of the vehicle; and
at least one connecting element (140) between the first lower side (114) of the at least one first cover element (110) and the second upper side (122) of the second cover element (120),
wherein a first fastening element (150) of a first type is insertable through at least one first through-hole (116) in the first cover element (110) from its first upper side (112) into a first end (142) of the at least one connecting element (140), wherein the first fastening element (150) is configured to connect the first cover element (110) to the vehicle, wherein a second fastening element (160) of a second type is insertable through at least one second through-hole (126) in the second cover element (120) from its second lower side (124) into a second end (144), opposite the first end, of the at least one connecting element (140), in order to connect the second cover element (120) to the first cover element (110),
wherein the first cover element (110) comprises at least one first receptacle (118) into which the at least one connecting element (140) is insertable,
wherein the second cover element (120) comprises at least one second receptacle (128) which is opposite the at least one first receptacle (118) and into which the at least one connecting element (140) is insertable, and
wherein at least one of the first or second receptacle (118, 128) has a non-circular cross-section in order to prevent rotation of the at least one connecting element (140) in the at least one receptacle (118, 128).

2. The holding device (100) according to claim 1, wherein the first cover element (110) is an upper cover element and/or an upper shell, preferably a one-piece upper shell.

3. The holding device (100) according to claim 1 or 2, wherein the second cover element (120) is a lower cover element and/or a cross member, preferably wherein the second cover element (120) comprises a plurality of cross members.

4. The holding device (100) according to any one of claims 1 to 3, wherein the at least one connecting element (140) has an internal thread into which the first fastening element (150) and the second fastening element (160) are screwable.

5. The holding device (100) according to any one of claims 1 to 4, wherein the at least one connecting element (140) is a long nut.

6. The holding device (100) according to any one of claims 1 to 5, wherein the second lower side (124) of the second cover element (120) is configured to be arranged, in a mounted state, in the vehicle such that it faces an energy storage device of the vehicle.

7. A vehicle, preferably a truck, comprising the holding device (100) according to any one of claims 1 to 6.

8. The vehicle according to claim 7, further comprising a plurality of lines (20) arranged in the holding device (100), preferably wherein the plurality of lines (20) comprise electrical lines and/or hydraulic lines.

9. A method (700) for mounting a holding device for lines on a vehicle, comprising:
inserting (710) a first fastening element of a first type through at least one first through-hole in a first cover element of a first type from its upper side into a first end of at least one connecting element arranged on a lower side of the first cover element, in order to connect the first cover element to the vehicle; and
inserting (720) a second fastening element of a second type through at least one second through-hole in a second cover element of a second type from its lower side into a second end of the at least one connecting element arranged on an upper side of the second cover element, in order to connect the second cover element to the first cover element.

## Revendications

1. Dispositif de réception (100) pour les conduites (20) d'un véhicule, comprenant :
un premier élément de recouvrement (110) d'un premier type avec un premier côté supérieur (112) et un premier côté inférieur (114) ;
un deuxième élément de recouvrement (120) d'un deuxième type avec un deuxième côté supérieur (122) et un deuxième côté inférieur (124), le premier côté inférieur (114) du premier élément de recouvrement (110) et le deuxième côté supérieur (122) du deuxième élément de recouvrement (120) fournissant un espace de réception (130) pour les conduites (20) du véhicule ; et
au moins un élément de liaison (140) entre le premier côté inférieur (114) de l'au moins un premier élément de recouvrement (110) et le deuxième côté supérieur (122) du deuxième élément de recouvrement (120),
où un premier élément de fixation (150) d'un premier type peut être inséré à travers au moins un premier trou traversant (116) dans le premier élément de recouvrement (110), depuis son premier côté supérieur (112), dans une première extrémité (142) de l'au moins un élément de liaison (140), le premier élément de fixation (150) étant adapté pour relier le premier élément de recouvrement (110) au véhicule, où un deuxième élément de fixation (160) d'un deuxième type peut être inséré à travers au moins un deuxième trou traversant (126) dans le deuxième élément de recouvrement (120), depuis son deuxième côté inférieur (124), dans une deuxième extrémité (144) de l'au moins un élément de liaison (140) opposée à la première extrémité, afin de relier le deuxième élément de recouvrement (120) au premier élément de recouvrement (110),
où le premier élément de recouvrement (110) comprend au moins un premier logement (118), dans lequel l'au moins un élément de liaison (140) peut être inséré ;
où le deuxième élément de recouvrement (120) comprend au moins un deuxième logement (118), qui est opposé à l'au moins un premier logement (118) et dans lequel l'au moins un élément de liaison (140) peut être inséré, et
où au moins l'un du premier logement ou du deuxième logement (118, 128) présente une section transversale anguleuse, afin d'empêcher une rotation de l'au moins un élément de liaison (140) dans l'au moins un logement (118, 128).

2. Dispositif de réception (100) selon la revendication 1, où le premier élément de recouvrement (110) est un élément de recouvrement supérieur et/ou une coque supérieure, notamment une coque supérieure réalisée d'une seule pièce.

3. Dispositif de réception (100) selon la revendication 1 ou 2, où le deuxième élément de recouvrement (120) est un élément de recouvrement inférieur et/ou une traverse, notamment où le deuxième élément de recouvrement (120) est une pluralité de traverses.

4. Dispositif de réception (100) selon l'une quelconque des revendications 1 à 3, où l'au moins un élément de liaison (140) présente un filetage intérieur, dans lequel le premier élément de fixation (150) et le deuxième élément de fixation (160) peuvent être vissés.

5. Dispositif de réception (100) selon l'une quelconque des revendications 1 à 4, où l'au moins un élément de liaison (140) est un écrou long.

6. Dispositif de réception (100) selon l'une quelconque des revendications 1 à 5, où le deuxième côté inférieur (124) du deuxième élément de recouvrement (120) est adapté pour être disposé, dans un état monté, dans le véhicule de telle sorte qu'il soit opposé à un accumulateur d'énergie du véhicule.

7. Véhicule, notamment camion, comprenant le dispositif de réception (100) selon l'une quelconque des revendications 1 à 6.

8. Véhicule selon la revendication 7, comprenant en outre une pluralité de conduites (20), qui sont disposées dans le dispositif de réception (100), la pluralité de conduites (20) comprenant notamment des conduites électriques et/ou des conduites hydrauliques.

9. Procédé (700) de montage d'un dispositif de réception pour des conduites sur un véhicule, comprenant :
l'insertion (710) d'un premier élément de fixation d'un premier type à travers au moins un premier trou traversant dans un premier élément de recouvrement d'un premier type, depuis son côté supérieur, dans une première extrémité d'au moins un élément de liaison, qui est disposé sur un côté inférieur du premier élément de recouvrement, afin de relier le premier élément de recouvrement au véhicule ; et
l'insertion (720) d'un deuxième élément de fixation d'un deuxième type à travers au moins un deuxième trou traversant dans un deuxième élément de recouvrement d'un deuxième type, depuis son côté inférieur, dans une deuxième extrémité de l'au moins un élément de liaison, qui est disposé sur un côté supérieur du deuxième élément de recouvrement, afin de relier le deuxième élément de recouvrement au premier élément de recouvrement.
